# EUROPEAN PATENT APPLICATION

(11) **EP 3 156 826 A1**
(43) Date of publication of application: **19.04.2017**
(21) Application number: 15808995.3
(22) Date of filing: 02.06.2015
(51) Int. Cl.: G01T 1/20

(54) **RADIATION DETECTOR AND METHOD FOR MANUFACTURING SAME**

(30) Priority: 16.06.2014 JP 2014123356
(71) Applicant: Toshiba Electron Tubes & Devices Co., Ltd., Otawara-shi, Tochigi 324-8550 (JP)
(72) Inventor: HOMMA, Katsuhisa, Otawara-shi Tochigi 324-8550 (JP); TAKATORI, Koji, Otawara-shi Tochigi 324-8550 (JP); HORIUCHI, Hiroshi, Otawara-shi Tochigi 324-8550 (JP); ICHIKAWA, Satoshi, Otawara-shi Tochigi 324-8550 (JP)
(74) Representative: Henkel, Breuer & Partner
(86) International application number: PCT/JP2015/065879
(87) International publication number: WO 2015/194361

(57) **Abstract**

According to the embodiment, a radiation detector includes an array substrate including a substrate and a plurality of photoelectric conversion elements being provided on one surface side of the substrate, a scintillator layer being provided on the plurality of photoelectric conversion elements and converting radiation into fluorescence, a wall body being provided on the one surface side of the substrate and surrounding the scintillator layer, a filling body provided between the scintillator layer and the wall body, and a moisture-resistant body covering above the scintillator layer, a peripheral edge portion vicinity of the moisture-resistant body being bonded to an upper surface of the filling body.

## Description

### [Technical Field]

Embodiments of the invention relates to a radiaton detector and a method for manufacturing same.

### [Background Art]

An X-ray detector is an example of a radiation detector. In the X-ray detector, an X-ray image is acquired by converting X-rays into visible light, i.e., fluorescence, by a scintillator layer and by converting the fluorescence into signal charge using photoelectric conversion elements such as amorphous silicon (a-Si) photodiodes, a CCD (Charge Coupled Device), etc.

Also, to increase the utilization efficiency of the fluorescence and improve the sensitivity characteristics, there are also cases where a reflective layer is further provided on the scintillator layer.

Here, it is necessary to isolate the scintillator layer and the reflective layer from the external atmosphere to suppress degradation of the resolution characteristics caused by water vapor, etc. In particular, in the case where the scintillator layer is made of CsI (cesium iodide): Tl (thallium), CsI:Na (sodium), etc., there is a risk that the resolution characteristic degradation due to the humidity, etc., may become large.

Therefore, as a structure in which high moisture resistance is obtained, a structure has been proposed in which the scintillator layer and the reflective layer are covered with a moisture-resistant body having a hat-like configuration; and the brim (the brim) portion of the moisture-resistant body is bonded to the substrate.

High moisture resistance can be obtained by covering the scintillator layer and the reflective layer with the moisture-resistant body having the hat-like configuration and by bonding the brim portion of the moisture-resistant body to the substrate.

Here, to ensure sealability between the substrate and the brim portion of the moisture-resistant body having the hat-like configuration and to obtain high reliability, it is favorable to set the width dimension of the brim portion of the moisture-resistant body to be long. However, if the width dimension of the brim portion of the moisture-resistant body is set to be long, extra space corresponding to the width dimension becomes necessary.

Also, it is difficult to control the amount of the bonding agent overflowing from the brim portion of the moisture-resistant body toward the outer side. Further, it is necessary to provide interconnect pads electrically connected to the flexible printed circuit board, etc., further on the outer side of the region where the bonding agent overflows.

Therefore, when the width dimension of the brim portion of the moisture-resistant body is set to be long and the region where the bonding agent overflows is to be ensured, the dimensions of the region that must be provided at the periphery of the effective pixel area increases; and there is even a risk that an increase of the dimensions and an increase of the weight of the radiation detector may occur.

Also, a structure has been proposed in which a surrounding ring that surrounds the scintillator layer is provided; and a cover is bonded to the upper surface of the surrounding ring.

In such a case, to ensure the sealability between the cover and the upper surface of the surrounding ring and to obtain high reliability, it is favorable to set the width dimension of the surrounding ring to be long.

However, if the width dimension of the surrounding ring is set to be long, the dimension of the region that must be provided at the periphery of the effective pixel area increases; and there is even a risk that an increase of the dimensions and an increase of the weight of the radiation detector may occur.

Also, it is difficult to obtain high moisture resistance in such a structure.

### [Citation List]

### [Patent Literature]

[Patent Literature 1] JP 2009-128023 A
[Patent Literature 2] JP 2001-188086 A
[Patent Literature 3] JP H05-242841 A

### [Summary of Invention]

### [Technical Problem]

A problem to be solved by the invention is to provide a radiation detector and a method for manufacturing the radiation detector in which better space conservation and improvement of the moisture resistance can be realized.

### [Technical Solution]

According to the embodiment, a radiation detector includes an array substrate including a substrate and a plurality of photoelectric conversion elements being provided on one surface side of the substrate, a scintillator layer being provided on the plurality of photoelectric conversion elements and converting radiation into fluorescence, a wall body being provided on the one surface side of the substrate and surrounding the scintillator layer, a filling body provided between the scintillator layer and the wall body, and a moisture-resistant body covering above the scintillator layer, a peripheral edge portion vicinity of the moisture-resistant body being bonded to an upper surface of the filling body.

### [Brief Description of Drawings]

[FIG. 1] FIG. 1 is a schematic perspective view for illustrating the X-ray detector 1 according to the first embodiment.
[FIG. 2] FIG. 2 is a schematic cross-sectional view of the X-ray detector 1.
[FIG. 3] FIG. 3 is a schematic cross-sectional view of an X-ray detector 1a including a moisture-resistant body 17 according to another embodiment.
[FIG. 4] FIG. 4A is a schematic front view of the moisture-resistant body 17. FIG. 4B is a schematic side view of the moisture-resistant body 17.
[FIG. 5] FIG. 5 is a schematic cross-sectional view of an X-ray detector 1b including a moisture-resistant body 27 according to another embodiment.
[FIG. 6] FIG. 6 is a graph for illustrating the change of the moisture permeation amount under a high-temperature high-humidity environment (60 °C/90% RH).
[FIG. 7] FIG. 7 is a graph for illustrating the change of the resolution characteristics under a high-temperature high-humidity environment (60 °C/90% RH).

### [Description of Embodiments]

Embodiments will now be illustrated with reference to the drawings. Similar components in the drawings are marked with the same reference numerals; and a detailed description is omitted as appropriate.

Also, other than X-rays, the radiation detectors according to the embodiments of the invention also are applicable to various radiation such as γ-rays, etc. Here, as an example, a case relating to X-rays is described as a typical example of radiation. Accordingly, applications to other radiation also are possible by replacing "X-ray" of the embodiments recited below with "other radiation."

### (First embodiment)

First, an X-ray detector 1 according to a first embodiment will be illustrated.

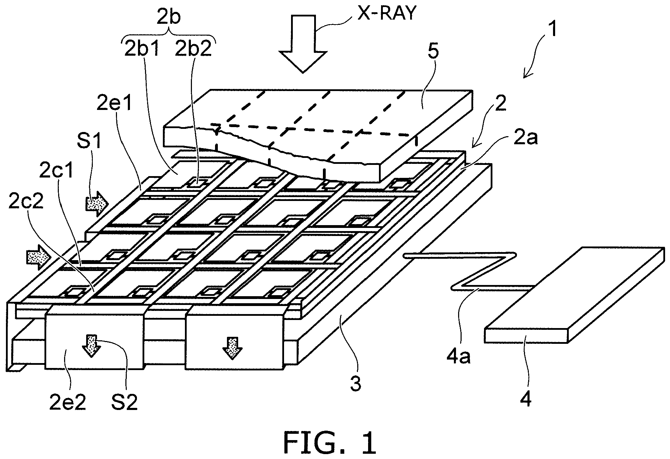

FIG. 1 is a schematic perspective view for illustrating the X-ray detector 1 according to the first embodiment.

To avoid complexity in FIG. 1, a reflective layer 6, a moisture-resistant body 7, a filling body 8, a wall body 9, a bonding layer 10, etc., are not illustrated.

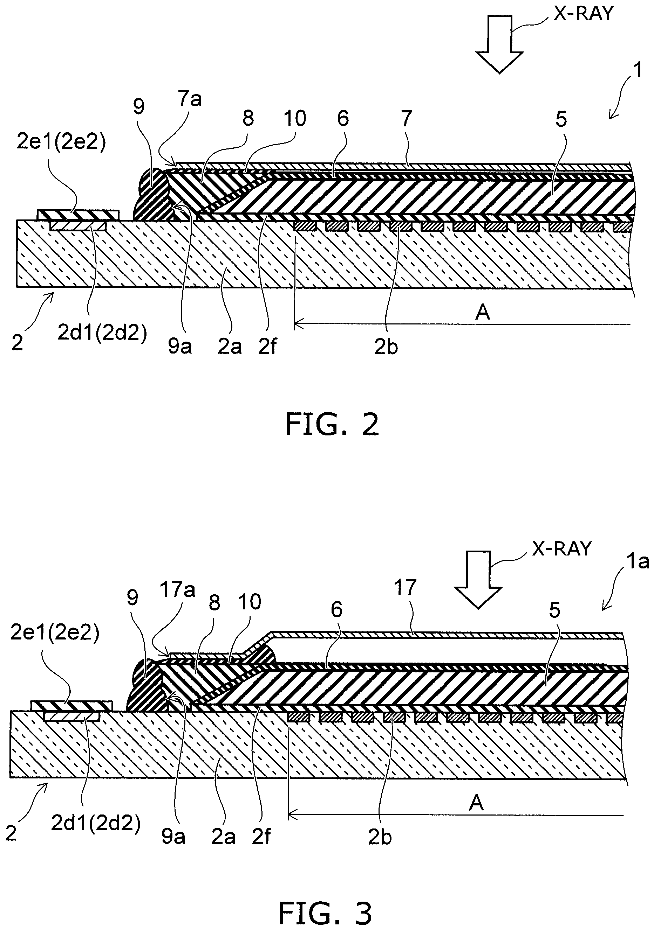

FIG. 2 is a schematic cross-sectional view of the X-ray detector 1.

To avoid complexity in FIG. 2, control lines (or gate lines) 2c1, data lines (or signal lines) 2c2, a signal processor 3, an image transmitter 4, etc., are not illustrated.

The X-ray detector 1, which is a radiation detector, is an X-ray planar sensor that detects X-ray images which are radiation images. For example, the X-ray detector 1 can be used in general medical applications, etc. However, the applications of the X-ray detector 1 are not limited to general medical applications.

As shown in FIG. 1 and FIG. 2, an array substrate 2, the signal processor 3, the image transmitter 4, a scintillator layer 5, the reflective layer 6, the moisture-resistant body 7, the filling body 8, the wall body 9, and the bonding layer 10 are provided in the X-ray detector 1.

The array substrate 2 includes a substrate 2a, photoelectric converters 2b, the control lines 2c1, the data lines 2c2, and a protective layer 2f.

The substrate 2a has a plate configuration and is formed from a transparent material such as alkali-free glass, etc.

The photoelectric converters 2b are multiply provided on one front surface of the substrate 2a.

The photoelectric converters 2b have rectangular configurations and are provided in regions that are defined by the control lines 2c1 and the data lines 2c2. The multiple photoelectric converters 2b are arranged in a matrix configuration.

One photoelectric converter 2b corresponds to one pixel (pixel).

A thin film transistor (TFT; thin film transistor) 2b2 which is a switching element and a photoelectric conversion element 2b1 are provided in each of the multiple photoelectric converters 2b.

Also, a not-illustrated storage capacitor that stores the signal charge converted by the photoelectric conversion element 2b1 can be provided. For example, the not-illustrated storage capacitor has a rectangular flat plate configuration and can be provided under each of the thin film transistors 2b2. However, the photoelectric conversion element 2b1 also can be used as the not-illustrated storage capacitor according to the capacitance of the photoelectric conversion element 2b1.

For example, the photoelectric conversion element 2b1 can be a photodiode, etc.

The thin film transistor 2b2 performs the switching of the storing and the discharging of the charge generated by the fluorescence being incident on the photoelectric conversion element 2b1. The thin film transistor 2b2 can include a semiconductor material such as amorphous silicon (a-Si), polysilicon (P-Si), etc. The thin film transistor 2b2 includes a gate electrode, a source electrode, and a drain electrode. The gate electrode of the thin film transistor 2b2 is electrically connected to the corresponding control line 2c1. The source electrode of the thin film transistor 2b2 is electrically connected to the corresponding data line 2c2. The drain electrode of the thin film transistor 2b2 is electrically connected to the corresponding photoelectric conversion element 2b1 and a not-illustrated storage capacitor.

The control lines 2c1 are multiply provided to be parallel to each other at a prescribed spacing. The control lines 2c1 extend in a first direction (e.g., the row direction).

The multiple control lines 2c1 are electrically connected respectively to multiple interconnect pads 2d1 provided at the peripheral edge vicinity of the substrate 2a. One end of each of multiple interconnects provided in a flexible printed circuit board 2e1 is electrically connected respectively to the multiple interconnect pads 2d1. The other end of each of the multiple interconnects provided in the flexible printed circuit board 2e1 is electrically connected to a not-illustrated control circuit provided in the signal processor 3.

The data lines 2c2 are multiply provided to be parallel to each other at a prescribed spacing. The data lines 2c2 extend in a second direction (e.g., the column direction) orthogonal to the first direction.

The multiple data lines 2c2 are electrically connected respectively to multiple interconnect pads 2d2 provided at the peripheral edge vicinity of the substrate 2a. One end of each of multiple interconnects provided in a flexible printed circuit board 2e2 is electrically connected respectively to the multiple interconnect pads 2d2. The other end of each of the multiple interconnects provided in the flexible printed circuit board 2e2 is electrically connected to a not-illustrated amplifier/converter circuit provided in the signal processor 3.

The protective layer 2f is provided to cover the photoelectric converters 2b, the control lines 2c1, and the data lines 2c2.

The protective layer 2f can be formed from an insulating material such as silicon nitride (SiN), an acrylic resin, etc.

The signal processor 3 is provided on the side opposite to the side where the photoelectric converters 2b of the substrate 2a are provided.

A not-illustrated control circuit and a not-illustrated amplifier/converter circuit are provided in the signal processor 3.

The not-illustrated control circuit controls the operations, i.e., the ON state and the OFF state, of each of the thin film transistors 2b2. For example, the not-illustrated control circuit sequentially applies a control signal S1 to each of the control lines 2c1 via the flexible printed circuit board 2e1, the interconnect pad 2d1, and the control line 2c1. By the control signal S1 applied to the control line 2c1, the thin film transistor 2b2 is switched to the ON state; and an image data signal S2 from the photoelectric converters 2b can be received.

The not-illustrated amplifier/converter circuit includes, for example, multiple charge amplifiers, parallel/serial converters, and analog-digital converters.

The multiple charge amplifiers are electrically connected respectively to the data lines 2c2.

The multiple parallel/serial converters are electrically connected respectively to the multiple charge amplifiers.

The multiple analog-digital converters are electrically connected respectively to the multiple parallel/serial converters.

The not-illustrated multiple charge amplifiers sequentially receive the image data signals S2 from the photoelectric converters 2b via the data lines 2c2, the interconnect pads 2d2, and the flexible printed circuit boards 2e2.

Then, the not-illustrated multiple charge amplifiers sequentially amplify the received image data signals S2.

The not-illustrated multiple parallel/serial converters sequentially convert the amplified image data signals S2 into serial signals.

The not-illustrated multiple analog-digital converters sequentially convert, into digital signals, the image data signals S2 converted into the serial signals.

The image transmitter 4 is electrically connected to the not-illustrated amplifier/converter circuit of the signal processor 3 via an interconnect 4a. The image transmitter 4 may be formed as one body with the signal processor 3.

The image transmitter 4 configures an X-ray image based on the image data signals S2 converted into the digital signals by the not-illustrated multiple analog-digital converters. The data of the configured X-ray image is output from the image transmitter 4 to an external device.

The scintillator layer 5 is provided on the multiple photoelectric conversion elements 2b1 and converts the incident X-rays into visible light, i.e., fluorescence.

For example, the scintillator layer 5 can be formed using cesium iodide (CsI):thallium (Tl), sodium iodide (NaI):thallium (Tl), etc.

The scintillator layer 5 is an aggregate of columnar crystals.

For example, the scintillator layer 5 that is made of the aggregate of the columnar crystals can be formed using vacuum vapor deposition, etc.

The thickness dimension of the scintillator layer 5 can be set to be, for example, about 600 µm. For example, the diametrical dimension of the column (the pillar) of the columnar crystal at the outermost surface can be set to be about 8 µm to 12 µm.

Also, for example, the scintillator layer 5 can be formed using gadolinium oxysulfide (Gd₂O₂S), etc. In such a case, for example, the scintillator layer 5 can be formed as follows. First, particles that are made of gadolinium oxysulfide are mixed with a binder material. Then, the mixed material is coated to cover the region on the substrate 2a where the multiple photoelectric converters 2b are provided. Then, the coated material is baked. Then, a trench is formed in the baked material by using blade dicing, etc. At this time, the trench can be formed in a matrix configuration so that the scintillator layer 5 having a quadrilateral prism configuration is provided at each of the multiple photoelectric converters 2b. The trench can be filled with ambient air (air) or an inert gas such as nitrogen gas, etc., for oxidation prevention. Also, the trench may be set to a vacuum state.

The reflective layer 6 is provided for increasing the utilization efficiency of the fluorescence and improving the sensitivity characteristics. In other words, the reflective layer 6 reflects the fluorescence that is generated by the scintillator layer 5 and travels toward the side opposite to the side where the photoelectric converters 2b are provided and causes the light to travel toward the photoelectric converters 2b.

The reflective layer 6 covers the incident side of the X-rays of the scintillator layer 5.

For example, the reflective layer 6 can be formed by coating a resin including light-scattering particles such as titanium oxide (TiO₂), etc., on the scintillator layer 5. Also, for example, the reflective layer 6 can be formed by forming a layer made of a metal having high light reflectance such as a silver alloy, aluminum, etc., on the scintillator layer 5.

Also, for example, the reflective layer 6 can be formed using a plate having a front surface made of a metal having high light reflectance such as a silver alloy, aluminum, etc.

The reflective layer 6 illustrated in FIG. 2 is formed by coating, on the incident side of the X-rays of the scintillator layer 5, a material made by mixing a solvent, a binder resin, and a sub-micron powder made of titanium oxide and by drying the coating.

In such a case, the thickness dimension of the reflective layer 6 can be set to be about 120 µm.

The reflective layer 6 is not always necessary; and it is sufficient for the reflective layer 6 to be provided as necessary.

Hereinbelow, the case is illustrated where the reflective layer 6 is provided.

The moisture-resistant body 7 is provided for suppressing the degradation of the characteristics of the reflective layer 6 and the characteristics of the scintillator layer 5 due to water vapor included inside the air.

The moisture-resistant body 7 covers above the reflective layer 6. In such a case, there may be a gap between the moisture-resistant body 7 and the upper surface of the reflective layer 6; or the moisture-resistant body 7 and the upper surface of the reflective layer 6 may be in contact.

For example, if the moisture-resistant body 7 and the upper surface of the filling body 8 are bonded in an environment depressurized from atmospheric pressure, the moisture-resistant body 7 and the upper surface of the reflective layer 6 contact each other due to the atmospheric pressure.

The moisture-resistant body 7 covers above the scintillator layer 5; and the peripheral edge portion vicinity of the moisture-resistant body 7 is bonded to the upper surface of the filling body 8.

The position of an end surface 7a of the moisture-resistant body 7 can be set so that the position is on the outer side of an effective pixel area A and on the inner side of an inner surface 9a of the wall body 9 when viewed in plan.

In such a case, when viewed in plan, the reliability and the sealability between the moisture-resistant body 7 and the upper surface of the filling body 8 can be increased if the position of the end surface 7a of the moisture-resistant body 7 is set to be proximal to the inner surface 9a of the wall body 9.

The moisture-resistant body 7 has a film-like configuration, a foil configuration, or a thin plate configuration.

The moisture-resistant body 7 can be formed from a material having a small moisture permeance.

For example, the moisture-resistant body 7 can be formed from aluminum, an aluminum alloy, a low-moisture-permeability moisture-resistant film (a water vapor barrier film) in which a resin film and a film made of an inorganic material (a metal such as aluminum, an aluminum alloy, etc., a ceramic material such as SiO₂, SiON, Al₂O₃, etc.) are stacked, etc.

In such a case, if the moisture-resistant body 7 is formed using aluminum, an aluminum alloy, etc., in which the effective moisture permeance is substantially zero, the water vapor that passes through the moisture-resistant body 7 can be substantially completely eliminated.

Also, the thickness dimension of the moisture-resistant body 7 can be determined by considering the absorption of the X-rays, the rigidity, etc. In such a case, the absorption of the X-rays becomes too large if the thickness dimension of the moisture-resistant body 7 is set to be too large. If the thickness dimension of the moisture-resistant body 7 is set to be too small, the rigidity decreases and breakdown occurs easily.

For example, the moisture-resistant body 7 can be formed using an aluminum foil having a thickness dimension of 0.1 mm.

The filling body 8 is provided between the inner surface 9a of the wall body 9 and the side surface of the scintillator layer 5 covered with the reflective layer 6.

The position of the upper surface of the filling body 8 can be about the same as the position of the upper surface of the scintillator layer 5 covered with the reflective layer 6.

In such a case, the position of the upper surface of the filling body 8 may be the same as the position of the upper surface of the scintillator layer 5 covered with the reflective layer 6, may be slightly higher than the position of the upper surface of the scintillator layer 5 covered with the reflective layer 6, or may be slightly lower than the position of the upper surface of the scintillator layer 5 covered with the reflective layer 6.

The position of the upper surface of the filling body 8 can be set to be slightly lower than the position of the upper surface of the wall body 9.

If the position of the upper surface of the filling body 8 is set to be slightly lower than the position of the upper surface of the wall body 9, the material for forming the filling body 8 can be such that the material does not flow over the upper surface of the wall body 9 when performing the filling described below.

In such a case, the material for forming the filling body 8 can have a low moisture permeance.

The filling body 8 includes, for example, a resin (e.g., an epoxy resin, etc.) and a filler material made of an inorganic material.

For example, the filler material can be formed from talc (talc: Mg₃Si₄O₁₀(OH)₂), etc.

Talc is an inorganic material having low hardness and high slipperiness. Therefore, the shape deformation of the filling body 8 is not difficult even when a high concentration of talc is contained.

The concentration (the filling density) of talc can be increased if the particle size of the filler material made of talc is set to be about several µm to several tens of µm.

If the concentration of talc is increased, the moisture permeance can be lower by a factor of about ten compared to the case of only the resin.

Here, titanium oxide which is an inorganic material is included also in the reflective layer 6.

However, the inorganic material that is included in the reflective layer 6 is for improving the light-scattering properties.

The light-scattering properties can be corrected using the type (the refractive index, the transparency, the stability, etc.) and the particle size (e.g., it is desirable to have an average particle size of about 0.3 µm) of the inorganic material, the proportion of the inorganic material and the binder resin, the type and content ratio of the solvent, etc.

On the other hand, the inorganic material that is included in the filling body 8 is for reducing the moisture permeation amount. Therefore, if the concentration of the inorganic material is set to be too low, there is a risk that the moisture permeation amount may increase and the resolution characteristics may degrade.

In such a case, it is favorable to set the concentration of the inorganic material included in the filling body 8 to be high in a range in which gaps do not occur between the resin material, cracks do not occur in the drying after the filling, and the fluidic properties necessary when forming the filling body are not lost (gaps of the filling body do not occur easily).

For example, the concentration of the filler material made of talc included in the filling body 8 can be set to 50 weight% or more.

It is favorable for the upper surface of the filling body 8 to be flat.

If the upper surface of the filling body 8 is flat, the sealability between the moisture-resistant body 7 and the upper surface of the filling body 8 can be ensured; and high reliability can be obtained.

In such a case, the upper surface of the filling body 8 can be caused to be flat by setting the viscosity of the material for forming the filling body 8 to be low.

For example, it is sufficient to set the viscosity of the material for forming the filling body 8 to be about 120 Pa·sec or less at room temperature.

Also, the filling body 8 may include a hygroscopic material and a resin (e.g., an epoxy resin, etc.).

For example, the material for forming the filling body 8 can be made by mixing calcium chloride which is a hygroscopic material, a binder resin (e.g., an epoxy resin, a silicone resin, etc.), and a solvent.

In such a case, for example, the density can be set to be about 2.1 g/cc; the moisture absorption capacity per unit weight can be set to be about 27%; and the viscosity can be set to be about 120 Pa·sec or less at room temperature.

Also, the filling body 8 that is flexible can be formed by further adding an epoxidized vegetable oil such as epoxidized linseed oil, etc.

If the filling body 8 is flexible, the occurrence of peeling due to stress caused by a temperature change and the thermal expansion difference between the members can be suppressed by the flexibility of the filling body 8.

The wall body 9 has a frame-like configuration. When viewed in plan, the wall body 9 is provided on the outer side of the scintillator layer 5 and on the inner side of the region where the interconnect pads 2d1 and 2d2 are provided.

In such a case, if the wall body 9 is provided at the vicinity of the region where the interconnect pads 2d1 and 2d2 are provided, the surface area of the upper surface of the filling body 8 can be set to be large. Therefore, the reliability and the sealability between the moisture-resistant body 7 and the upper surface of the filling body 8 can be increased.

The material for forming the wall body 9 can have a low moisture permeance.

The wall body 9 includes, for example, a resin (e.g., an epoxy resin, etc.) and a filler material made of an inorganic material.

The material for forming the wall body 9 can be similar to the material for forming the filling body 8.

However, the viscosity of the material for forming the wall body 9 is higher than the viscosity of the material for forming the filling body 8.

For example, the viscosity of the material for forming the wall body 9 can be about 340 Pa·sec at room temperature.

Also, for example, the wall body 9 can be formed from a metal such as aluminum, etc., or an inorganic material such as glass, etc.

In the actual manufacturing process, the filling body 8 can be formed by forming the frame body 9 first, and by subsequently filling and curing the material of the filling body 8 in the gap between the frame body 9 and the side surfaces of the scintillator layer 5 and the reflective layer 6.

The bonding layer 10 is provided between the moisture-resistant body 7 and the upper surface of the filling body 8 and bonds the filling body 8 and the peripheral edge vicinity of the moisture-resistant body 7.

It is unnecessary for the formation of the bonding layer 10 to be limited only to the upper portion of the filling body 8. For example, it is not a problem for the bonding layer 10 to be formed to spread to the upper portion of the wall body 9 on the outer side of the filling body 8, to the reflective layer 6 on the inner side of the filling body 8, or to the peripheral edge upper portion of the scintillator layer 5.

For example, the bonding layer 10 can be formed by the curing of one of a delayed-curing adhesive (a type of the UV-curing adhesive in which the curing reaction becomes prominent a constant amount of time after UV irradiation), an ambient (room temperature) curing adhesive, or a thermosetting adhesive.

FIG. 3 is a schematic cross-sectional view of an X-ray detector 1a including a moisture-resistant body 17 according to another embodiment.

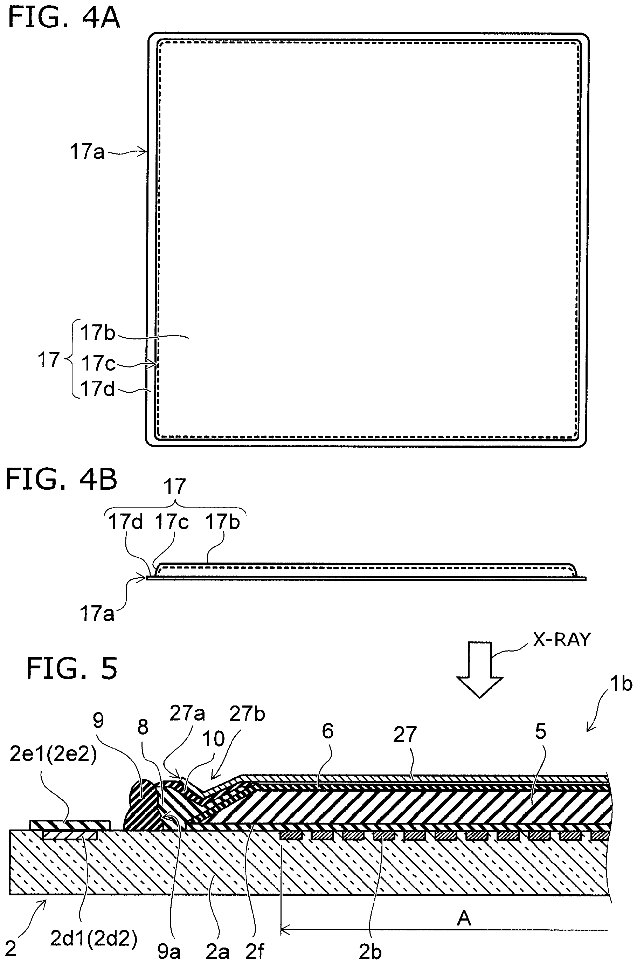

FIG. 4A is a schematic front view of the moisture-resistant body 17.

FIG. 4B is a schematic side view of the moisture-resistant body 17.

As shown in FIG. 3, the array substrate 2, the signal processor 3, the image transmitter 4, the scintillator layer 5, the reflective layer 6, the moisture-resistant body 17, the filling body 8, the wall body 9, and the bonding layer 10 are provided in the X-ray detector 1a.

In other words, in the X-ray detector 1a, the moisture-resistant body 17 is provided instead of the moisture-resistant body 7 described above.

As shown in FIG. 4A and FIG. 4B, the moisture-resistant body 17 has a hat-like configuration and includes a front surface portion 17b, a perimeter surface portion 17c, and a brim (brim) portion 17d.

The front surface portion 17b, the perimeter surface portion 17c, and the brim portion 17d of the moisture-resistant body 17 can be formed as one body.

The material of the moisture-resistant body 17 can be similar to the material of the moisture-resistant body 7 described above.

The thickness of the moisture-resistant body 17 can be similar to the thickness of the moisture-resistant body 7 described above.

The front surface portion 17b faces the front side (the incident surface side of the X-rays) of the scintillator layer 5.

The perimeter surface portion 17c is provided to surround the peripheral edge of the front surface portion 17b. The perimeter surface portion 17c extends from the peripheral edge of the front surface portion 17b toward the substrate 2a side.

There may be a gap between the front surface portion 17b and the reflective layer 6.

The brim portion 17d is provided to surround the end portion of the side opposite to the front surface portion 17b side of the perimeter surface portion 17c. The brim portion 17d extends from the end portion of the perimeter surface portion 17c toward the outer side. The brim portion 17d has an annular configuration.

The brim portion 17d is bonded to the upper surface of the filling body 8 via the bonding layer 10.

The position of an end surface 17a of the moisture-resistant body 17 when viewed in plan can be set to be on the outer side of the effective pixel area A, on the outer side of the inner surface 9a of the wall body 9, about the same as the inner surface 9a, or on the inner side of the inner surface 9a.

In such a case, when viewed in plan, the reliability and the sealability between the moisture-resistant body 17 (the brim portion 17d) and the upper surface of the filling body 8 can be increased if the position of the end surface 17a of the moisture-resistant body 17 is set to be on the outer side of the inner surface 9a of the wall body 9, about the same as the inner surface 9a, or proximal to the inner side of the inner surface 9a.

If the moisture-resistant body 17 having the hat-like configuration is used, the rigidity can be increased.

Also, positional alignment when bonding the moisture-resistant body 17 to the upper surface of the filling body 8 can be performed by utilizing the three-dimensional configuration made of the front surface portion 17b and the perimeter surface portion 17c.

Therefore, the bonding precision and the manufacturability when bonding the moisture-resistant body 17 to the upper surface of the filling body 8 can be increased.

FIG. 5 is a schematic cross-sectional view of an X-ray detector 1b including a moisture-resistant body 27 according to another embodiment.

As shown in FIG. 5, the array substrate 2, the signal processor 3, the image transmitter 4, the scintillator layer 5, the reflective layer 6, the moisture-resistant body 27, the filling body 8, the wall body 9, and the bonding layer 10 are provided in the X-ray detector 1b.

In other words, in the X-ray detector 1b, the moisture-resistant body 27 is provided instead of the moisture-resistant body 7 described above.

As shown in FIG. 5, a bent portion 27b that protrudes toward the substrate 2a side is provided at the peripheral edge vicinity of the moisture-resistant body 27.

The bent portion 27b is provided to surround the peripheral edge of the moisture-resistant body 27.

The bent portion 27b is bonded to the upper surface of the filling body 8 via the bonding layer 10.

When viewed in plan, the position of an end surface 27a of the moisture-resistant body 27 can be set to be on the outer side of the effective pixel area A, on the outer side of the inner surface 9a of the wall body 9, about the same as the inner surface 9a, or on the inner side of the inner surface 9a.

If the moisture-resistant body 27 includes the bent portion 27b, the rigidity can be increased.

Also, the positional alignment when bonding the moisture-resistant body 27 to the upper surface of the filling body 8 can be performed by fitting the bent portion 27b into a recess provided in the upper surface of the filling body 8.

Therefore, the bonding precision and the manufacturability when bonding the moisture-resistant body 27 to the upper surface of the filling body 8 can be increased.

Also, the bonding surface area can be increased by providing the bent portion 27b. Therefore, improvement of the bonding strength and improvement of the moisture resistance can be realized.

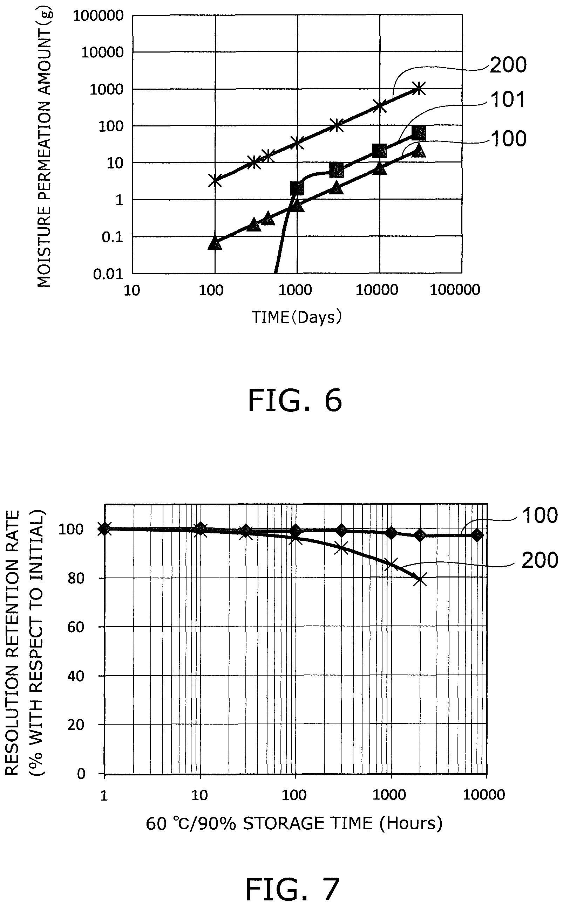

FIG. 6 is a graph for illustrating the change of the moisture permeation amount under a high-temperature high-humidity environment (60 °C/90% RH).

200 in FIG. 6 is the case where the moisture-resistant body 7 is bonded to the upper surface of the wall body 9, and the filling body 8 is not provided.

100 and 101 in FIG. 6 are the case of the X-ray detector 1 according to the embodiment.

100 is the case where the filling body 8 is formed from a resin including a filler material.

101 is the case where the filling body 8 is formed from a resin including a hygroscopic material.

It can be seen from FIG. 6 that a decrease of the moisture permeation amount can be realized by providing the filling body 8.

FIG. 7 is a graph for illustrating the change of the resolution characteristics under a high-temperature high-humidity environment (60 °C/90% RH).

200 in FIG. 7 is the case where the moisture-resistant body 7 is bonded to the upper surface of the wall body 9, and the filling body 8 is not provided.

100 in FIG. 7 is the case of the X-ray detector 1 according to the embodiment.

100 is the case where the filling body 8 is formed from a resin including a filler material.

Also, FIG. 7 shows how the resolution characteristics obtained by the scintillator layer 5 and the reflective layer 6 degrade under the high-temperature high-humidity environment (60 °C/90% RH) as the storage time elapses.

The evaluation was performed with respect to the humidity for the resolution characteristics, which are more sensitive than the luminance characteristics.

The resolution characteristics were determined using a method in which a resolution chart is disposed on the front side of each sample; X-rays corresponding to RQA-5 are irradiated; and a CTF (Contrast transfer function) having 2 Lp/mm as the index of the resolution is measured from the backside.

To make the samples used in the evaluation, full-surface transmissive substrates in which patterns such as the pixels, etc., are not formed were used for easier CTF measurements from the back surface.

It can be seen from FIG. 7 that the degradation of the resolution characteristics can be reduced remarkably by providing the filling body 8.

As described above, by providing the filling body 8, it is unnecessary to provide the space for bonding the moisture-resistant bodies 7, 17, and 27 on the outer side of the wall body 9 because the moisture-resistant bodies 7, 17, and 27 can be bonded to the upper surface of the filling body 8.

Therefore, the X-ray detectors 1, 1a, and 1b that are smaller, lighter, etc., can be realized.

Also, by providing the filling body 8, the moisture resistance can be improved; and even the degradation of the resolution characteristics also can be suppressed.

### (Second embodiment)

A method for manufacturing the X-ray detectors 1, 1a, and 1b according to a second embodiment will now be illustrated.

First, the array substrate 2 is made.

For example, the array substrate 2 can be made by sequentially forming the photoelectric converters 2b, the control lines 2c1, the data lines 2c2, the interconnect pads 2d1, the interconnect pads 2d2, the protective layer 2f, etc., on the substrate 2a.

For example, the array substrate 2 can be made using a semiconductor manufacturing process.

Then, the scintillator layer 5 is provided to cover the region where the multiple photoelectric converters 2b are formed on the array substrate 2.

For example, the scintillator layer 5 can be formed by forming a film made of cesium iodide:thallium using vacuum vapor deposition, etc. In such a case, the thickness dimension of the scintillator layer 5 can be set to be about 600 µm. The diametrical dimension of the column of the columnar crystal at the outermost surface can be set to be about 8 to 12 µm.

Then, the reflective layer 6 is formed to cover the surface on the front side (the incident surface side of the X-rays) of the scintillator layer 5. For example, the reflective layer 6 can be formed by coating and drying, on the scintillator layer 5, a material made by mixing a solvent, a binder resin, and a sub-micron powder made of titanium oxide.

Then, the wall body 9 that includes a filler material and a resin and surrounds the scintillator layer 5 covered with the reflective layer 6 is provided on the array substrate 2.

For example, the wall body 9 can be formed by coating and curing, at the periphery of the scintillator layer 5 covered with the reflective layer 6, a resin to which a filler material is added (e.g., an epoxy resin to which a filler material made of talc is added, etc.).

For example, the coating of the resin to which the filler material is added can be performed using a dispenser apparatus, etc.

In such a case, the wall body 9 can be formed by multiply repeating the coating and the curing of the resin to which the filler material is added.

Also, the wall body 9 that has a frame-like configuration made of a metal, a resin, etc., can be bonded on the array substrate 2.

The wall body 9 also can be formed by bonding, onto the array substrate 2, a member having a plate configuration made of a metal, a resin, etc.

In such a case, the height of the wall body 9 can be set to be slightly higher than the height of the scintillator layer 5 covered with the reflective layer 6.

Then, the filling body 8 is provided by filling a material including a resin and at least one of a filler material or a hygroscopic material between the inner surface 9a of the wall body 9 and the side surface of the scintillator layer 5 covered with the reflective layer 6.

For example, the filling body 8 can be formed by filling and curing a resin to which a filler material is added and a resin to which a hygroscopic material is added between the inner surface 9a of the wall body 9 and the side surface of the scintillator layer 5 covered with the reflective layer 6.

For example, the filling can be performed using a dispenser apparatus, etc.

In such a case, the filling body 8 can be formed by multiply repeating the coating and the curing of the resin to which the filler material is added and the resin to which the hygroscopic material is added.

It is favorable to perform the curing after waiting until the surface becomes smooth after the coating of the resin.

The position of the upper surface of the filling body 8 may be the same as the position of the upper surface of the scintillator layer 5 covered with the reflective layer 6, may be slightly higher than the position of the upper surface of the scintillator layer 5 covered with the reflective layer 6, or may be slightly lower than the position of the upper surface of the scintillator layer 5 covered with the reflective layer 6.

By providing the filling body 8, it is unnecessary to provide the space for bonding the moisture-resistant bodies 7, 17, and 27 on the outer side of the wall body 9 because the moisture-resistant bodies 7, 17, and 27 can be bonded to the upper surface of the filling body 8.

Therefore, the X-ray detectors 1, 1a, and 1b that are smaller, lighter, etc., can be realized.

Also, by providing the filling body 8, the improvement of the moisture resistance and even the suppression of the degradation of the resolution characteristics can be realized.

Then, the peripheral edge portion vicinity of the moisture-resistant body 7 covering above the scintillator layer 5 is bonded to the upper surface of the filling body 8.

Or, the brim portion 17d of the moisture-resistant body 17 is bonded to the upper surface of the filling body 8. At this time, the positional alignment can be performed by utilizing the three-dimensional configuration made of the front surface portion 17b and the perimeter surface portion 17c.

Or, the moisture-resistant body 27 is bonded to the upper surface of the filling body 8. At this time, the bent portion 27b can be fitted into a recess provided in the upper surface of the filling body 8. Also, the bent portion 27b of the filling body 8 can be pressed onto the filling body 8 before the filling body 8 hardens.

For example, the bonding layer 10 is formed and the moisture-resistant bodies 7, 17, and 27 are bonded to the upper surface of the filling body 8 by coating an ultraviolet-curing adhesive on the upper surface of the filling body 8, placing the moisture-resistant bodies 7, 17, and 27 on the ultraviolet-curing adhesive, and curing by irradiating ultraviolet rays onto the ultraviolet-curing adhesive. Also, the ultraviolet-curing adhesive may be a delayed-curing adhesive in which the curing progresses after a delay after the ultraviolet irradiation.

By using the delayed-curing adhesive, it is sufficient for the moisture-resistant bodies 7, 17, and 27 to be placed on the ultraviolet-curing adhesive after the ultraviolet irradiation; therefore, the bonding can be performed even in the case where the irradiation of the ultraviolet rays is difficult due to a light-shielding object, etc.

The bonding agent may be an ambient-curing adhesive, a thermosetting adhesive, etc.

Also, the peripheral edge portion vicinities of the moisture-resistant bodies 7, 17, and 27 can be bonded to the upper surface of the filling body 8 in an environment depressurized from atmospheric pressure (e.g., about 10 kPa).

Then, the array substrate 2 and the signal processor 3 are electrically connected via the flexible printed circuit boards 2e1 and 2e2.

Also, the signal processor 3 and the image transmitter 4 are electrically connected via the interconnect 4a.

Also, circuit components, etc., are appropriately mounted.

Then, the array substrate 2, the signal processor 3, the image transmitter 4, etc., are housed in the interior of a not-illustrated housing.

Then, as necessary, an electrical test, an X-ray image test, a high-temperature high-humidity test, a temperature cycle test, etc., are performed to confirm the existence or absence of abnormalities of the photoelectric conversion elements 2b1 or abnormalities of the electrical connections.

Thus, the X-ray detectors 1, 1a, and 1b can be manufactured.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Moreover, above-mentioned embodiments can be combined mutually and can be carried out.

### [Reference Numeral List]

- 1: X-ray detector
- 2: array substrate
- 2a: substrate
- 2b: photoelectric converter
- 3: signal processor
- 4: image transmitter
- 5: scintillator layer
- 6: reflective layer
- 7: moisture-resistant body
- 8: filling body
- 9: wall body
- 10: bonding layer
- 17: moisture-resistant body
- 27: moisture-resistant body

## Claims

1. A radiation detector, comprising:
an array substrate including a substrate and a plurality of photoelectric conversion elements, the plurality of photoelectric conversion elements being provided on one surface side of the substrate;
a scintillator layer being provided on the plurality of photoelectric conversion elements and converting radiation into fluorescence;
a wall body being provided on the one surface side of the substrate and surrounding the scintillator layer;
a filling body provided between the scintillator layer and the wall body; and
a moisture-resistant body covering above the scintillator layer, a peripheral edge portion vicinity of the moisture-resistant body being bonded to an upper surface of the filling body.

2. The radiation detector according to claim 1, wherein the wall body includes a filler material and a resin, the filler material being made of an inorganic material.

3. The radiation detector according to claim 1, wherein the filling body includes a filler material and a resin, the filler material being made of an inorganic material.

4. The radiation detector according to claim 1, wherein the filling body includes a hygroscopic material and a resin.

5. The radiation detector according to claim 1, wherein the moisture-resistant body includes at least one of aluminum or an aluminum alloy.

6. A method for manufacturing a radiation detector, comprising:
providing a scintillator layer on an array substrate including a plurality of photoelectric conversion elements;
providing a wall body on the array substrate, the wall body surrounding the scintillator layer and including a filler material and a resin;
providing a filling body between the scintillator layer and the wall body by filling a material, the material including a resin and at least one of a filler material or a hygroscopic material; and
bonding a peripheral edge portion vicinity of a moisture-resistant body to an upper surface of the filling body, the moisture-resistant body covering above the scintillator layer.

7. The method for manufacturing the radiation detector according to claim 6, wherein the bonding of the peripheral edge portion vicinity of the moisture-resistant body to the upper surface of the filling body includes bonding the peripheral edge portion vicinity of the moisture-resistant body to the upper surface of the filling body by using one of a delayed-curing adhesive, an ambient-curing adhesive, or a thermosetting adhesive.

8. The method for manufacturing the radiation detector according to claim 6, wherein the bonding of the peripheral edge portion vicinity of the moisture-resistant body to the upper surface of the filling body includes bonding the peripheral edge portion vicinity of the moisture-resistant body to the upper surface of the filling body in an environment depressurized from atmospheric pressure.

## Amended claims

### Amended claims under Art. 19.1 PCT

In order to improve the sealing property between the thin glass plate 13 and the moisture-proof layer 14a described in JP2012-185123A, the sealing property between the moisture-proof protection layer 18 and the filler material 30 described in JP2007-298464A, the sealing property between the protection layer 2 and the adsorbent 4 described in JP1-316696A, the sealing property between the resin layer 5 and the first organic film 4 described in JP2011-257143A, it is necessary to increase an area of each of upper surfaces of the moisture-proof layer 14a, the filler material 30, the adsorbent 4, the first organic film 4.

However, since peripheral portions of the scintillator layer 12, the fluorescence material layer 14, the stimulable layer 1, and the scintillator 3 have perpendicular side surfaces, if the area of each of the upper surfaces of the moisture-proof layer 14a, the filler material 30, the adsorbent 4, the first organic film 4 is increased, a broad space is necessary around the scintillator layer 12, the fluorescence material layer 14, the stimulable layer 1, and the scintillator 3. Please refer to [0003] of the application for this matter.

By contrast, since the scintillator layer described in claim 1 after the amendment has "a peripheral portion presenting a tapered configuration", even if the area of the upper surface of the filled portion 8 is made large, the space necessary for surrounding of the scintillator layer 5 can be small.

JP2011-58831A and JP2008-82852A do not describe "wall body", "filled portion", and thus the constitution of the invention is different.

In this manner, claim 1 is different from the cited documents in the constitutions. Claim 1 could not have easily been made by a person skilled in the art, and possesses the inventive step.

Statement under Art. 19.1 PCT
1. A radiation detector comprising:
an array substrate including a substrate and a plurality of photoelectric conversion elements being provided on one surface side of the substrate;
a scintillator layer provided on the plurality of photoelectric conversion elements, a peripheral portion of the scintillator layer having a tapered shape slanting in a direction toward a center of the array substrate as the peripheral portion goes in a upward direction;
a wall body provided on the one surface of the substrate) to be close to the peripheral portion of the scintillator layer and surrounding the scintillator layer;
a filling unit provided between the scintillator layer and the wall body, the filling unit adhering to an inner side surface of the wall body, being close or adhering to the peripheral portion of the scintillator layer having the tapered shape, filling a space above the peripheral portion of the scintillator layer, and a position of an upper surface of the filling unit being located to be close to a position of an upper surface of the wall body;and
a moisture-resistant body covering above the scintillator layer, at least a closed portion of a peripheral portion of the moisture-resistant body being bonded to the upper surface of the filling unit.

2. The radiation detector according to claim 1, further comprising:
a bonding layer bonding the upper surface of the filling unit to a lower surface of the closed portion of the moisture-resistant body; and
a reflective layer provided between the scintillator layer and the moisture-resistant body,
the bonding layer also bonding at least one of the upper surface of the wall body, a upper surface of the reflective layer, and a upper surface of the scintillator layer to the lower surface of the closed portion of the moisture-resistant body.

3. The radiation detector according to claim 1, wherein the wall body includes a filler material and a resin, the filler material is made of an inorganic material.

4. The radiation detector according to claim 1, wherein the filling unit includes a filler material and a resin, the filler material is made of an inorganic material.

5. The radiation detector according to claim 1, wherein the filling unit includes a hygroscopic material and a resin.

6. The radiation detector according to claim 1, wherein the moisture-resistant body includes at least one of aluminum or an aluminum alloy.

7. A method for manufacturing a radiation detector, comprising :
providing a scintillator layer on an array substrate including a plurality of photoelectric conversion elements;
providing a wall body on the array substrate, the wall body surrounding the scintillator layer and including a filler material and a resin;
providing a filling unit between the scintillator layer and the wall body by filling a material, the material including a resin and at least one of a filler material or a hygroscopic material; and
bonding a peripheral edge portion vicinity of a moisture-resistant body to an upper surface of the filling unit, the moisture-resistant body covering above the scintillator layer.

8. The method for manufacturing the radiation detector according to claim 7, wherein the bonding of the peripheral edge portion vicinity of the moisture-resistant body to the upper surface of the filling unit includes bonding the peripheral edge portion vicinity of the moisture-resistant body to the upper surface of the filling unit by using one of a delayed-curing adhesive, an ambient-curing adhesive, or a thermosetting adhesive.

9. The method for manufacturing the radiation detector according to claim 7, wherein the bonding of the peripheral edge portion vicinity of the moisture-resistant body to the upper surface of the filling unit includes bonding the peripheral edge portion vicinity of the moisture-resistant body to the upper surface of the filling unit in an environment depressurized from atmospheric pressure.
